# EUROPÄISCHE PATENTANMELDUNG

(11) **EP 3 416 120 A1**
(43) Veröffentlichungstag der Anmeldung: **19.12.2018**
(21) Anmeldenummer: 18177651.9
(22) Anmeldetag: 14.06.2018
(51) Int. Cl.: G06Q 20/32, G06Q 20/34, G06Q 20/38, G06Q 20/40

(54) **ANORDNUNG UND VERFAHREN ZUR NUTZERAUTHENTIFIZIERUNG UND ZUGRIFFS-AUTORISIERUNG**

(30) Priorität: 14.06.2017 DE 102017113190
(71) Anmelder: Rubean AG, 81379 München (DE)
(72) Erfinder: Geupel, Hermann, 81925 München (DE); Pein, Henrik, 25421 Pinneberg (DE)
(74) Vertreter: Heinze, Ekkehard

(57) **Zusammenfassung**

Anordnung zur Autorisierung des Zugriffs auf ein Bankkonto oder eine Datenbasis, das/die auf den Zugriff mittels einer Karte vom Chip-and-Pin-Typ ausgelegt ist, oder zur Nutzerauthentifizierung für solche Zugriffe an einem Nutzerendgerät eines drahtlosen Netzwerkes, wobei die Anordnung umfasst: ◆ das Nutzerendgerät, welches aufweist:
- ein Standard-Betriebssystem,
- ein Trusted Execution Environment, TEE, und
- ein embedded Secure Element, eSE,
◆ eine auf dem Nutzerendgerät virtuell abgelegte Karte zum Zugriff auf das Bankkonto oder die Datenbasis,
◆ einen Bank- bzw. Datenbasis-Server, der den Zugang zum Bankkonto oder zur Datenbasis und die Kommunikation mit den Nutzern realisiert,
◆ ein Dienstleistungssystem und
◆ eine Mobile App zur Implementierung einer vertrauenswürdigen Benutzeroberfläche (Trusted User Interface), TUI, des Nutzerendgerätes, über die eine die Karte schützende PIN eingegeben werden kann, zur Autorisierung eines Zugriffs oder zur Nutzerauthentifizierung für solche Zugriffe, wobei die Mobile App aufweist:

- eine erste Teil-App, die in dem TEE implementiert ist und die TUI realisiert,
- eine zweite Teil-App, die in dem eSE implementiert ist und die Kommunikation des Nutzerendgerätes mit dem Bank- bzw. Datenbasis-Server realisiert, sowie
- eine dritte Teil-App, die im Standard-Betriebssystem implementiert ist und die Kommunikation zwischen der ersten und zweiten Teil-App realisiert.

## Beschreibung

Die Erfindung betrifft eine Anordnung zur Autorisierung des Zugriffs auf ein Bankkonto oder eine Datenbasis, das/die auf den Zugriff mittels einer Karte vom Chip-and-Pin-Typ ausgelegt ist, oder zur Nutzerauthentifizierung für solche Zugriffe an einem Nutzerendgerät eines drahtlosen Netzwerkes. Sie betrifft des weiteren Verfahren, die mittels einer solchen Anordnung ausgeführt werden. Derartige Anordnungen und Verfahren sind insbesondere, aber nicht ausschließlich, im Kontext von Onlinezahlungen für Waren und Leistungen einsetzbar.

In Onlineshops stehen heute oft mehrere Verfahren zur Auswahl, um sich im Rahmen der Autorisierung einer Onlinezahlung zu authentifizieren:
- mit Vorkasse, Sofortüberweisung oder PIN und TAN basierte OnlineBanking-Verfahren, bei denen der Kunde seine Onlinebanking PIN parat haben und die TAN handhaben muss
- mit ApplePay und Selfie-Pay (http://www.welt.de/finanzen/verbraucher/article152595657/Mastercard-Kunden-koennen-bald-per-Selfie-bezahlen.html biometrische Verfahren, die zu fälschlichen Abweisungen führen können
- mit Paypal ein technisch nicht so sicheres Verfahren, mit der ausschließlichen Prüfung eines Passwortes.

In der unveröffentlichten europäischen Patentanmeldung Nr. 16204208.9 schlägt die Anmelderin ein für den Benutzer einfaches und doch hochgradig sicheres Verfahren und System der genannten Art vor, das mit hochwertigen mobilen Endgeräten zuverlässig funktioniert.

Hierbei wird einem geeigneten Smartphone die Funktion eines Kassenterminals für Debit- und Kreditkarten zugeordnet, die zu einer drahtlosen Nahbereichs-Datenübertragung (NFC) fähig sind. Im Hinblick auf die Erfüllung der für Bezahlvorgänge gängigen Sicherheitsanforderungen sind die herstellerseitig implementierten Sicherheitsmerkmale des jeweiligen Nutzerendgerätes von Bedeutung.

In der unveröffentlichten deutschen Patentanmeldung Nr. 102017106295.2 hat sich die Anmelderin die Aufgabe gestellt, ein weiteres benutzerfreundliches und zugleich sicheres Verfahren und System zur Autorisierung von Onlinezahlungen aufzuzeigen, das mit mittel- und niederpreisigen Endgeräten implementiert werden kann und somit für breitere Nutzerkreise zugänglich wird.

Die gestellte Aufgabe löst die genannte Anmeldung insbesondere dadurch, dass die Karten-PIN, die zu einer EMV konformen Aktivierung der Signaturfunktion auf der Debit- oder Kreditkarte (Karte) benötigt wird, nicht über eine Nutzerschnittstelle des Nutzerendgerätes (Smartphone) eingegeben wird, was Schutzmaßnahmen gegen ein PIN-Phishing erfordern würde, sondern automatisch von einem Server aus Ende-zu-Ende (vom Server zur Karte) gesichert über das Nutzerendgerät in die Karte geschickt wird.

Im Onlinebanking eingesetzt, ersetzt das dort beschriebene Verfahren die TAN (international: One Time Code) durch eine Signatur auf der Karte, die bisher nur über spezielle, kontaktbehaftete Kartenlesegeräte (Secoder) und nicht über ein handelsübliches Smartphone angestoßen werden konnte.

Auch angesichts dieses neueren Standes der Technik besteht, insbesondere angesichts weiter verfeinerter und aggressiver Phishing-Attacken, weiterhin das Problem der Gewährleistung einer möglichst alle Verfahrensschritte und Systemkomponenten einschließenden höchstmöglicher Sicherheit vor einem Ausspähen kritischer Benutzerdaten.

Im Zuge dieser Entwicklungen besteht weiterhin das Problem, eine Lösung zur möglichst sicheren und zugleich benutzerfreundlichen Authentifizierung bzw. Autorisierung bei Online-Bezahlvorgängen und anderen sicherheitskritischen Zugriffen auf geschützte Datenbestände anzugeben.

Diese Aufgabe wird in ihrem Vorrichtungsaspekt durch eine Anordnung mit den Merkmalen des Anspruchs 1 und in verschiedenen Verfahrensaspekten durch Verfahren mit den Merkmalen des Anspruchs 9 bzw. des Anspruchs 14 gelöst. Zweckmäßige Fortbildungen des Erfindungsgedankens sind Gegenstand der jeweiligen abhängigen Ansprüche.

Die Erfindung schließt den Gedanken ein, sicherheitskritische Bezahlvorgänge oder Datenbasis-Zugriffe mittels eines Nutzerendgerätes auszuführen, welches -
- ein Standard-Betriebssystem,
- ein Trusted Execution Environment, TEE, und
- ein embedded Secure Element, eSE,
aufweist. Weiter schließt die Erfindung den Gedanken ein, hierzu eine auf dem Nutzerendgerät virtuell abgelegte Karte zum Zugriff auf das Bankkonto oder die Datenbasis zu nutzen.

Schließlich gehört zur Erfindung der Gedanke des Einsatzes einer Mobile App zur Implementierung einer vertrauenswürdigen Benutzeroberfläche (Trusted User Interface), TUI, des Nutzerendgerätes, über die eine die Karte schützende PIN eingegeben werden kann, zur Autorisierung eines Zugriffs oder zur Nutzerauthentifizierung für solche Zugriffe. Diese Mobile App umfasst eine erste Teil-App, die in dem TEE implementiert ist und die TUI realisiert, eine zweite Teil-App, die in dem eSE implementiert ist und die Kommunikation des Nutzerendgerätes mit dem Bank- bzw. Datenbasis-Server realisiert, sowie eine dritte Teil-App, die im Standard-Betriebssystem implementiert ist und die Kommunikation zwischen der ersten und zweiten Teil-App realisiert.
Mit dieser Anordnungsstruktur wird in vorteilhafter Weise von neuesten Entwicklungen der Hard- und Softwarearchitektur hochentwickelter Nutzerendgeräte (insbesondere Smartphones) Gebrauch gemacht, ohne dass grundsätzliche Veränderungen hieran vorgenommen werden müssten. Dies macht die vorgeschlagene Lösung einerseits in großer Breite einsetzbar und vermeidet andererseits zusätzliche Hardware- und Softwareentwicklungskosten. Zudem wird mit der erfindungsgemäßen Verknüpfung aus dieser - an sich bekannten - Hard- und Softwarearchitektur und einer speziell strukturierten Mobile App eine für den Nutzer unkomplizierte Lösung implementiert, die hohe Nutzerakzeptanz genießen wird und mit der sich somit breiteste Anwendungen erschließen lassen.

In einer Ausführung der Erfindung enthalten die erste und zweite Teil-App jeweils ein aus einem privaten und öffentlichen Schlüssel bestehendes Schlüsselpaar eines asymmetrischen Kryptosystems.

In einer weiteren Ausführung ist die virtuelle Karte im eSE des Nutzerendgerätes implementiert.

In einer weiteren Ausführung der Erfindung ist die virtuelle Karte mit der PIN einer korrespondierenden physischen Chip-and-Pin-Karte geschützt. Alternativ ist die virtuelle Karte mit einer nutzerdefinierten PIN geschützt, die sich von der bank-definierten PIN der korrespondierenden physischen Chip-and-Pin-Karte unterscheidet. Während die erstere Option besonders nutzerfreundlich ist, hat die letztere Option den Vorteil eines noch besseren Schutzes der physischen Bankkarte vor Ausspähung.

In einer weiteren Ausführung weist das Nutzerendgerät Lesemittel zum Einlesen einer physischen Chip-and-Pin-Karte zur Identifizierung der zu ladenden virtuellen Karte auf. Diese Variante ist wiederum vorteilhaft im Hinblick auf eine möglichst benutzerfreundliche Ausgestaltung der vorgeschlagenen Lösung.

In einer weiteren bevorzugten Ausführung weist das Nutzerendgerät NFC-Sende- und NFC-Empfangsmittel zur Realisierung einer bidirektionalen NFC-Funktionalität auf, insbesondere als NFC-fähiges Smartphone ausgebildet ist. Hiermit wird die erfindungsgemäße Lösung mit etablierten und breiten Nutzerkreisen vertrauten Bezahlverfahren verknüpft, wie sie von Tankstellen, aus dem Einzelhandel etc. bekannt sind. Insbesondere können hierbei die NFC-Sende- und NFC-Empfangsmittel die Lesemittel zum Einlesen der physischen Chip-and-Pin-Karte realisieren.

In einer ersten Ausprägung des erfindungsgemäßen Verfahrens dient dieses zur initialen Freigabe einer virtuellen Karte für Zugriffe auf ein Bankkonto oder eine Datenbasis mittels einer Anordnung der oben erläuterten Art, wobei das Verfahren zumindest die folgenden Schritte aufweist:
A) Eingabe der die virtuelle Karte im Nutzerendgerät schützenden PIN über die TUI und Empfang durch die im TEE implementierte erste Teil-App,
B) Verschlüsselung der eingegebenen PIN mit dem öffentlichen Schlüssel der zweiten Teil-App des Kryptosystems und interne Übermittlung an die im eSE implementierte zweite Teil-App über die dritte Teil-App,
C) Entschlüsselung der PIN in der zweiten Teil-App mit deren privatem Schlüssel,
D) Übermittlung der PIN und einer signierten Freischaltungsanfrage, als Kryptogramm formatiert, an den Bank- bzw. Datenbasis-Server,
E) Prüfung der Gültigkeit der PIN und der Freischaltungsanfrage durch den Bank- bzw. Datenbasis-Server und
F) Übermittlung einer Freigabe-Nachricht über die zweite Teil-App an die virtuelle Karte.

In einer Ausführung des Verfahrens schließen mindestens die Schritte D und F eine über einen Dienstleistungs-Server eines Dienstleistungssystems verlaufende Kommunikation zwischen dem Nutzerendgerät und dem Bank- bzw. Datenbasis-Server ein.

In einer weiteren Ausführung des Verfahrens gibt der Nutzer im Schritt A) die physische Chip-and-Pin-Karte schützende PIN ein, und der Bank- bzw. Datenbasis-Server fordert im Schritt E) den Nutzer zugleich zur Festlegung einer nutzerdefinierten zweiten PIN zur künftigen Autorisierung von Zugriffen mittels der Karte auf und übermittelt die Aufforderung an die erste Teil-App. Daraufhin wird durch diese eine Anzeige für den Nutzer in der TUI generiert, und die Schritte A) bis F) werden mit einer vom Nutzer eingegeben zweiten PIN wiederholt. In einer hierzu alternativen Verfahrensdurchführung gibt der Nutzer im Schritt A) eine nutzerdefinierte PIN ein, die sich von der PIN der korrespondierenden physischen Chip-and-PIN-Karte unterscheidet.

In einer weiteren zweckmäßigen Verfahrensführung geht der Nutzerauthentifizierung ein im NFC Protokoll erfolgendes, automatisches Einlesen der relevanten Nutzerdaten zur Generierung der virtuellen Karte im Nutzerendgerät aus einer in die Nähe des Nutzerendgerätes gebrachten physischen Chip-and-Pin-Karte voran.

Gemäß einer weiteren verfahrensmäßigen Ausgestaltung der Erfindung dient diese zur Autorisierung des (einzelnen) Zugriffs auf ein Bankkonto oder eine Datenbasis, wiederum mit einer Anordnung der oben beschriebenen Art. In dieser Ausprägung hat das Verfahren die folgenden Schritte:
a) Eingabe der die virtuelle Karte im Nutzerendgerät schützenden PIN über die TUI und Empfang durch die im TEE implementierte erste Teil-App,
b) Verschlüsselung der eingegebenen PIN mit dem öffentlichen Schlüssel der zweiten Teil-App des zweiten Kryptosystems und interne Übermittlung an die im eSE implementierte zweite Teil-App über die dritte Teil-App,
c) Entschlüsselung der PIN in der zweiten Teil-App mit deren privatem Schlüssel,
d) Übermittlung der PIN, in einem Kryptogramm formatiert, an den Bank- bzw. Datenbasis-Server,
e) Prüfung der Gültigkeit der PIN durch den Bank- bzw. Datenbasis-Server.

In einer Ausgestaltung dieser Verfahrensführung im Sinne einer "Online-PIN-Prüfung" werden nach dem Schritt c) folgende Zwischenschritte ausgeführt:
c1) Empfang von durch einen Dienstleistungs-Server eines Dienstleistungssystems übermittelten Transaktionsdaten durch die zweite Teil-App,
c2) Übermittlung der Transaktionsdaten von der zweiten Teil-App an die virtuelle Karte im eSE,
c3) Signatur der Transaktionsdaten durch die virtuelle Karte,
c4) Übermittlung der signierten Transaktionsdaten von der virtuellen Karte an die zweite Teil-App und Empfang durch diese,
und im Schritt d) werden zusammen mit der PIN die signierten Transaktionsdaten als Transaktionsanfrage, in einem Kryptogramm formatiert, über den Dienstleistungs-Server an den Bank- bzw. Datenbasis-Server übermittelt,
der Schritt e) ist ersetzt durch den Schritt
e') Prüfung der Gültigkeit der PIN und der signierten Transaktionsdaten durch den Bank- bzw. Datenbasis-Server,
   und nach dem Schritt e') wird ein Schritt
f) Übermittlung einer in einem Kryptogramm formierten Transaktionsfreigabe vom Bank- bzw. Datenbasis-Server an den Dienstleistungsserver
ausgeführt.

In einer weiteren Ausgestaltung/Modifikation jenes Verfahrens im Sinne einer "Offline-PIN-Prüfung" werden nach dem Schritt c) folgende Zwischenschritte ausgeführt:
c1) Empfang von durch einen Dienstleistungs-Server eines Dienstleistungssystems übermittelten Transaktionsdaten durch die zweite Teil-App,
c2) Übermittlung der Transaktionsdaten von der zweiten Teil-App und der PIN an die virtuelle Karte im eSE,
c3') Prüfung der PIN und Signatur der Transaktionsdaten durch die virtuelle Karte,
c4) Übermittlung der signierten Transaktionsdaten von der virtuellen Karte an die zweite Teil-App und Empfang durch diese,
   die Schritte d) und e) sind ersetzt durch die Schritte
d') Übermittlung der Transaktionsdaten als Transaktionsanfrage, in einem Kryptogramm formatiert, über den Dienstleistungs-Server an den Bank- bzw. Datenbasis-Server,
e") Prüfung der signierten Transaktionsdaten durch den Bank- bzw. Datenbasis-Server
   und nach dem Schritt e") wird ein Schritt
f) Übermittlung einer in einem Kryptogramm formierten Transaktionsfreigabe vom Bank- bzw. Datenbasis-Server an den Dienstleistungsserver
ausgeführt.

In einer weiteren Ausprägung des Autorisierungs-Verfahrens, in der dieses im Sinne einer "Online-PIN-Prüfung" bzw. "Offline-PIN-Prüfung" für einen Einkaufsvorgang eingesetzt wird, wird im Schritt c) eine Zwischenspeicherung der PIN in der zweiten Teil-App ausgeführt, und nach dem Schritt c) werden folgende Zwischenschritte ausgeführt:
c1) Empfang von durch einen Dienstleistungs-Server eines Onlinezahlungssystems oder ein Point-Of-Sales-Terminal übermittelten Transaktionsdaten durch die zweite Teil-App,
c2) Übermittlung der Transaktionsdaten von der zweiten Teil-App an die virtuelle Karte im eSE,
c3) Signatur der Transaktionsdaten durch die virtuelle Karte,
c4) Übermittlung der signierten Transaktionsdaten von der virtuellen Karte an die zweite Teil-App und Empfang durch diese,
und im Schritt d) werden zusammen mit der PIN die signierten Transaktionsdaten als Transaktionsanfrage über die Einrichtung, über die im Schritt c1) die Transaktionsdaten übermittelt wurden, an den Bank- bzw. Datenbasis-Server übermittelt und
nach dem Schritt e) werden die zusätzlichen Schritte
f) Übermittlung einer in einem Kryptogramm formierten Transaktionsfreigabe vom Bank- bzw. Datenbasis-Server an den Dienstleistungsserver bzw. das Point-Of-Sales-Terminal und
g) Durchführung der Transaktion und Erzeugung einer Bestätigungsnachricht ausgeführt.

In einer Ausgestaltung der letztgenannten Variante für den Fall einer Online-Bezahlung wird vor dem Schritt c1) eine Transaktions-ID mittels einer QR-Code-Scanner-App (wenn der Nutzer über ein anderes Nutzerendgerät online einkauft), einer Einkaufs-App oder eines geeignet ausgebildeten Browsers (wenn der Nutzer über das erfindungsgemäße Nutzerendgerät online einkauft) am Nutzerendgerät eingelesen, die zur Identifizierung der vom Dienstleistungs-Server zu übermittelnden Transaktionsdaten genutzt wird.

In einer anderen Verfahrensführung, die von einem sog. Point-Of-Sales-Terminal ausgeht, werden im Schritt c1) die Transaktionsdaten vom Point-Of-Sales-Terminal über eine NFC-Schnittstelle und einen Contactless-Frontend-Chip des Nutzerendgerätes direkt in die im eSE implementierte zweite Teil-App eingelesen.

Vorteile und Zweckmäßigkeiten der Erfindung ergeben sich im Übrigen aus der nachfolgenden Erläuterung der Figuren.
Fig. 1 eine schematische Darstellung, in Art eines kombinierten Blockdiagramms, eines ersten Ausführungsbeispiels der Erfindung, und
Fig. 2 eine schematische Darstellung eines zweiten Ausführungsbeispiels der Erfindung.

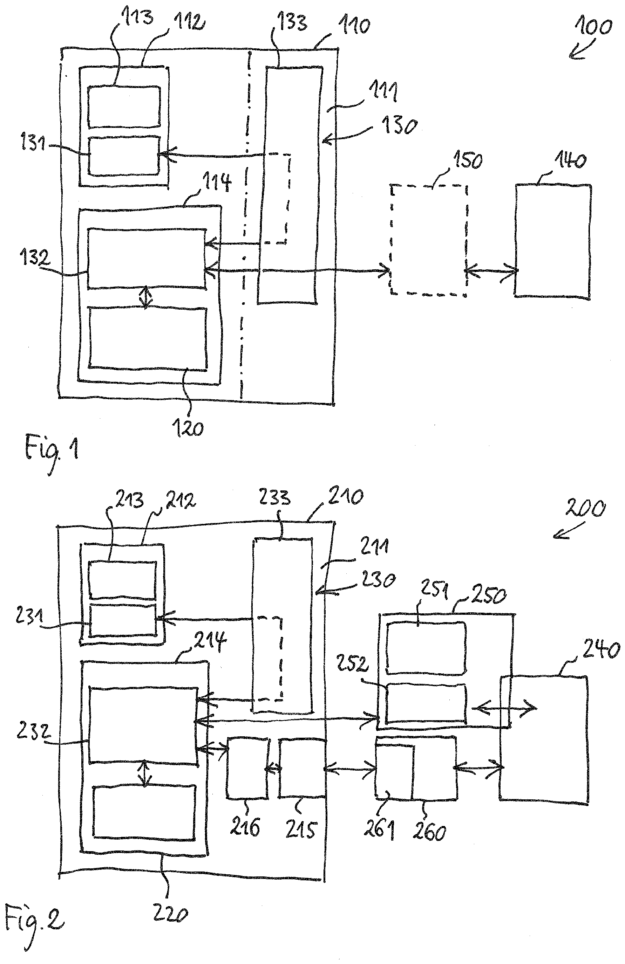

Fig. 1 zeigt eine erste erfindungsgemäße Anordnung 100 zur Nutzerauthentifizierung bzw. Zugriffs-Autorisierung in Bezug auf ein bei einer Bank gehaltenes Bankkonto. Die Anordnung umfasst ein Smartphone 110 als Nutzerendgerät, in dem neben der üblichen Standard-Hardware und -Software einschließlich eines Standard-Betriebssystems 111 ein Trusted Execution Environment (TEE) 112, welches eine vertrauenswürdige Benutzeroberfläche Trusted User Interface (TUI) 113 realisiert, und ein embedded Secure Element (eSE) 114 realisiert sind. Auf dem Nutzerendgerät 110 ist eine virtuelle Karte 120 zur Realisierung eines rein elektronischen Zugriffs auf das Bankkonto des Nutzers abgelegt, und zwar in der gezeigten Ausführung im eSE 114.

Im Nutzerendgerät 110 ist des Weiteren eine Mobile App 130 installiert, die eine im TEE 112 implementierte erste Teil-App 131 zur Realisierung der TUI 113, eine im eSE 114 implementierte zweite Teil-App 132 zur externen Kommunikation des Nutzerendgerätes 110 mit der Bank und eine im Standard-Betriebssystem 111 implementierte dritte Teil-App 133 zur Realisierung der Kommunikation zwischen der ersten und zweiten Teil-App implementiert.

Seitens der Bank wird die Kommunikation mit dem Nutzer und die Bearbeitung von Nutzerzugriffen auf das Bankkonto durch einen Bankserver 140 realisiert, und die Kommunikation mit einem optional mitwirkenden Dienstleistungssystem (etwa eines Zahlungsdienstleisters) und dessen Verarbeitung von Nutzer- und Transaktionsdaten läuft über einen Dienstleistungs-Server 150. Hinsichtlich spezieller Ausgestaltungen der Systemkomponenten wird auf die obigen Erläuterungen zu Ausführungsformen der Vorrichtung und hinsichtlich der mit dieser Anordnung zu realisierenden erfindungsgemäßen Verfahren wird auf die obigen Erläuterungen zu den Verfahrensaspekten der Erfindung verwiesen.

Fig. 2 zeigt als weiteres Beispiel eine Anordnung 200 zur Realisierung speziell von Einkaufsvorgängen. Die Anordnung stimmt weitgehend mit der oben beschriebenen Anordnung nach Fig. 1 überein, und insoweit wurden an Fig. 1 angelehnte Bezugsziffern verwendet, und die Beschreibung der entsprechenden Komponenten wird hier nicht wiederholt.

Das Smartphone 210 ist gegenüber dem Smartphone 110 nach Fig. 1 durch das Vorsehen einer NFC-Schnittstelle 215 zur Nahfeldkommunikation gemäß dem NFC-Standard und eines mit dieser Schnittstelle zusammenwirkenden Contactless Front End-Chips 216 modifiziert.

Jene zusätzlichen Komponenten im Smartphone sind zur Gewährleistung einer Kommunikation mit einem Point-Of-Sales-Terminal 260 vorgesehen, welches ebenfalls über eine NFC-Schnittstelle 261 verfügt.

Anstelle des Dienstleistungs-Servers 150 ist bei der Anordnung ein Onlinebezahlsystem 250 eingebunden, zu dem ein Webshop-Plugin 251 und ein Bestätigungsserver 252 gehören. Zudem ist dargestellt, dass es zwischen dem Online-Bezahlsystem 250 und dem Banksystem bzw. -server 240 Überlappungen geben kann, und die Kommunikation zwischen diesen ist allgemein mit einem über diese Systemkomponenten hinweg verlaufenden Doppelpfeil symbolisiert.

Mit der in Fig. 2 gezeigten Anordnung sind insbesondere verschiedene Abläufe im Rahmen von Online- bzw. Offline-PIN-Prüfungen realisierbar, die weiter oben erläutert sind.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Anordnung zur Autorisierung des Zugriffs auf ein Bankkonto oder eine Datenbasis, das/die auf den Zugriff mittels einer Karte vom Chip-and-Pin-Typ ausgelegt ist, oder zur Nutzerauthentifizierung für solche Zugriffe an einem Nutzerendgerät eines drahtlosen Netzwerkes, wobei die Anordnung umfasst:
◆ das Nutzerendgerät, welches aufweist:
- ein Standard-Betriebssystem,
- ein Trusted Execution Environment, TEE, und
- ein embedded Secure Element, eSE,
◆ eine auf dem Nutzerendgerät virtuell abgelegte Karte zum Zugriff auf das Bankkonto oder die Datenbasis,
◆ einen Bank- bzw. Datenbasis-Server, der den Zugang zum Bankkonto oder zur Datenbasis und die Kommunikation mit den Nutzern realisiert,
◆ ein Dienstleistungssystem und
◆ eine Mobile App zur Implementierung einer vertrauenswürdigen Benutzeroberfläche (Trusted User Interface), TUI, des Nutzerendgerätes, über die eine die Karte schützende PIN eingegeben werden kann, zur Autorisierung eines Zugriffs oder zur Nutzerauthentifizierung für solche Zugriffe, wobei die Mobile App aufweist:
- eine erste Teil-App, die in dem TEE implementiert ist und die TUI realisiert,
- eine zweite Teil-App, die in dem eSE implementiert ist und die Kommunikation des Nutzerendgerätes mit dem Bank- bzw. Datenbasis-Server realisiert, sowie
- eine dritte Teil-App, die im Standard-Betriebssystem implementiert ist und die Kommunikation zwischen der ersten und zweiten Teil-App realisiert.

2. Anordnung nach Anspruch 1, wobei die erste und zweite Teil-App jeweils ein aus einem privaten und öffentlichen Schlüssel bestehendes Schlüsselpaar eines asymmetrischen Kryptosystems enthalten.

3. Anordnung nach einem der vorangehenden Ansprüche, wobei die virtuelle Karte im eSE des Nutzerendgerätes implementiert ist.

4. Anordnung nach einem der vorangehenden Ansprüche, wobei die virtuelle Karte mit der PIN einer korrespondierenden physischen Chip-and-Pin-Karte geschützt ist.

5. Anordnung nach einem der Ansprüche 1-4, wobei die virtuelle Karte mit einer nutzerdefinierten PIN geschützt ist, die sich von der bank-definierten PIN der korrespondierenden physischen Chip-and-Pin-Karte unterscheidet.

6. Anordnung nach einem der vorangehenden Ansprüche, wobei das Nutzerendgerät Lesemittel zum Einlesen einer physischen Chip-and-Pin-Karte zur Identifizierung der zu ladenden virtuellen Karte aufweist.

7. Anordnung nach einem der vorangehenden Ansprüche, wobei das Nutzerendgerät NFC-Sende- und NFC-Empfangsmittel zur Realisierung einer bidirektionalen NFC-Funktionalität aufweist, insbesondere als NFC-fähiges Smartphone ausgebildet ist.

8. Anordnung nach Anspruch 7 und 8, wobei die NFC-Sende- und NFC-Empfangsmittel die Lesemittel zum Einlesen der physischen Chip-and-Pin-Karte realisieren.

9. Verfahren zur Freigabe einer virtuellen Karte für Zugriffe auf ein Bankkonto oder eine Datenbasis, das/die auf den Zugriff mittels einer Karte vom Chip-and-Pin-Typ ausgelegt ist, mittels einer Anordnung nach einem der Ansprüche 1-8, mit den Schritten:
A) Eingabe der die virtuelle Karte im Nutzerendgerät schützenden PIN über die TUI und Empfang durch die im TEE implementierte erste Teil-App,
B) Verschlüsselung der eingegebenen PIN mit dem öffentlichen Schlüssel der zweiten Teil-App des Kryptosystems und interne Übermittlung an die im eSE implementierte zweite Teil-App über die dritte Teil-App,
C) Entschlüsselung der PIN in der zweiten Teil-App mit deren privatem Schlüssel,
D) Übermittlung der PIN und einer signierten Freischaltungsanfrage, als Kryptogramm formatiert, an den Bank- bzw. Datenbasis-Server,
E) Prüfung der Gültigkeit der PIN und der Freischaltungsanfrage durch den Bank- bzw. Datenbasis-Server und
F) Übermittlung einer Freigabe-Nachricht über die zweite Teil-App an die virtuelle Karte.

10. Verfahren nach Anspruch 9, wobei mindestens die Schritte D und F eine über einen Dienstleistungs-Server eines Dienstleistungssystems verlaufende Kommunikation zwischen dem Nutzerendgerät und dem Bank- bzw. Datenbasis-Server einschließen.

11. Verfahren nach Anspruch 9 oder 10, wobei der Nutzer im Schritt A) die physische Chip-and-Pin-Karte schützende PIN eingibt und der Bank- bzw. Datenbasis-Server im Schritt E) den Nutzer zugleich zur Festlegung einer nutzerdefinierten zweiten PIN zur künftigen Autorisierung von Zugriffen mittels der Karte auffordert und die Aufforderung an die erste Teil-App übermittelt und durch diese eine Anzeige für den Nutzer in der TUI generiert wird und die Schritte A) bis F) mit einer vom Nutzer eingegeben zweiten PIN wiederholt werden.

12. Verfahren nach Anspruch 9 oder 10, wobei der Nutzer im Schritt A) eine nutzerdefinierte PIN eingibt, die sich von der PIN der korrespondierenden physischen Chip-and-PIN-Karte unterscheidet.

13. Verfahren nach einem der Ansprüche 9 bis 12, wobei der Nutzerauthentifizierung ein im NFC Protokoll erfolgendes, automatisches Einlesen der relevanten Nutzerdaten zur Generierung der virtuellen Karte im Nutzerendgerät aus einer in die Nähe des Nutzerendgerätes gebrachten physischen Chip-and-Pin-Karte vorangeht.

14. Verfahren zur Autorisierung des Zugriffs auf ein Bankkonto oder eine Datenbasis, das/die auf den Zugriff mittels einer Karte vom Chip-and-Pin-Typ ausgelegt ist, mit einer Anordnung nach einem der Ansprüche 1 -8, mit den Schritten:
a) Eingabe der die virtuelle Karte im Nutzerendgerät schützenden PIN über die TUI und Empfang durch die im TEE implementierte erste Teil-App,
b) Verschlüsselung der eingegebenen PIN mit dem öffentlichen Schlüssel der zweiten Teil-App des zweiten Kryptosystems und interne Übermittlung an die im eSE implementierte zweite Teil-App über die dritte Teil-App,
c) Entschlüsselung der PIN in der zweiten Teil-App mit deren privatem Schlüssel,
d) Übermittlung der PIN, in einem Kryptogramm formatiert, an den Bank- bzw. Datenbasis-Server,
e) Prüfung der Gültigkeit der PIN durch den Bank- bzw. Datenbasis-Server.

15. Verfahren nach Anspruch 14, wobei nach dem Schritt c) folgende Zwischenschritte ausgeführt werden:
c1) Empfang von durch einen Dienstleistungs-Server eines Dienstleistungssystems übermittelten Transaktionsdaten durch die zweite Teil-App,
c2) Übermittlung der Transaktionsdaten von der zweiten Teil-App an die virtuelle Karte im eSE,
c3) Signatur der Transaktionsdaten durch die virtuelle Karte,
c4) Übermittlung der signierten Transaktionsdaten von der virtuellen Karte an die zweite Teil-App und Empfang durch diese,
wobei im Schritt d) zusammen mit der PIN die signierten Transaktionsdaten als Transaktionsanfrage, in einem Kryptogramm formatiert, über den Dienstleistungs-Server an den Bank- bzw. Datenbasis-Server übermittelt werden und
wobei der Schritt e) ersetzt ist durch den Schritt
e') Prüfung der Gültigkeit der PIN und der signierten Transaktionsdaten durch den Bank- bzw. Datenbasis-Server,
und nach dem Schritt e') ein Schritt
f) Übermittlung einer in einem Kryptogramm formierten Transaktionsfreigabe vom Bank- bzw. Datenbasis-Server an den Dienstleistungsserver
ausgeführt wird.

16. Verfahren nach Anspruch 14, wobei nach dem Schritt c) folgende Zwischenschritte ausgeführt werden:
c1) Empfang von durch einen Dienstleistungs-Server eines Dienstleistungssystems übermittelten Transaktionsdaten durch die zweite Teil-App,
c2) Übermittlung der Transaktionsdaten von der zweiten Teil-App und der PIN an die virtuelle Karte im eSE,
c3') Prüfung der PIN und Signatur der Transaktionsdaten durch die virtuelle Karte,
c4) Übermittlung der signierten Transaktionsdaten von der virtuellen Karte an die zweite Teil-App und Empfang durch diese,
wobei die Schritte d) und e) ersetzt sind durch die Schritte
d') Übermittlung der Transaktionsdaten als Transaktionsanfrage, in einem Kryptogramm formatiert, über den Dienstleistungs-Server an den Bank- bzw. Datenbasis-Server,
e") Prüfung der signierten Transaktionsdaten durch den Bank- bzw. Datenbasis-Server
und wobei nach dem Schritt e") ein Schritt
f) Übermittlung einer in einem Kryptogramm formierten Transaktionsfreigabe vom Bank- bzw. Datenbasis-Server an den Dienstleistungsserver ausgeführt wird.

17. Verfahren nach Anspruch 14, wobei im Schritt c) eine Zwischenspeicherung der PIN in der zweiten Teil-App ausgeführt wird und nach dem Schritt c) folgende Zwischenschritte ausgeführt werden:
c1) Empfang von durch einen Dienstleistungs-Server eines Onlinezahlungssystems oder ein Point-Of-Sales-Terminal übermittelten Transaktionsdaten durch die zweite Teil-App,
c2) Übermittlung der Transaktionsdaten von der zweiten Teil-App an die virtuelle Karte im eSE,
c3) Signatur der Transaktionsdaten durch die virtuelle Karte,
c4) Übermittlung der signierten Transaktionsdaten von der virtuellen Karte an die zweite Teil-App und Empfang durch diese,
wobei im Schritt d) zusammen mit der PIN die signierten Transaktionsdaten als Transaktionsanfrage über die Einrichtung, über die im Schritt c1) die Transaktionsdaten übermittelt wurden, an den Bank- bzw. Datenbasis-Server übermittelt werden und
wobei nach dem Schritt e) die zusätzlichen Schritte
f) Übermittlung einer in einem Kryptogramm formierten Transaktionsfreigabe vom Bank- bzw. Datenbasis-Server an den Dienstleistungsserver bzw. das Point-Of-Sales-Terminal und
g) Durchführung der Transaktion und Erzeugung einer Bestätigungsnachricht ausgeführt werden.

18. Verfahren nach Anspruch 17, wobei vor dem Schritt c1) eine Transaktions-ID mittels einer QR-Code-Scanner-App, einer Einkaufs-App oder eines geeignet ausgebildeten Browsers am Nutzerendgerät eingelesen wird, die zur Identifizierung der vom Dienstleistungs-Server zu übermittelnden Transaktionsdaten genutzt wird.

19. Verfahren nach Anspruch 17, wobei im Schritt c1) die Transaktionsdaten vom Point-Of-Sales-Terminal über eine NFC-Schnittstelle und einen Contactless-Frontend-Chip des Nutzerendgerätes direkt in die im eSE implementierte zweite Teil-App eingelesen werden.
